**Europäisches Patentamt**

**European Patent Office**

**Office européen des brevets**

(19)

(11) Veröffentlichungsnummer: **0 110 200**
**B1**

(12)

# EUROPÄISCHE PATENTSCHRIFT

(45) Veröffentlichungstag der Patentschrift:
**04.02.87**

(51) Int. Cl.⁴: **A 61 C 1/00**

(21) Anmeldenummer: **83111103.4**

(22) Anmeldetag: **07.11.83**

(54) **Steuereinrichtung für in einem zahnärztlichen Gerät in Ablagen gehalterte Instrumente.**

(30) Priorität: **23.11.82 DE 3243294**

(43) Veröffentlichungstag der Anmeldung:
**13.06.84 Patentblatt 84/24**

(45) Bekanntmachung des Hinweises auf die Patenterteilung:
**04.02.87 Patentblatt 87/6**

(84) Benannte Vertragsstaaten:
**DE FR IT SE**

(56) Entgegenhaltungen:
**DE-A-2 248 268**
**DE-B-2 844 348**
**FR-A-2 278 311**
**FR-A-2 287 893**
**US-A-3 213 537**
**US-A-3 886 660**
**US-A-4 064 630**
**US-A-4 230 452**

(73) Patentinhaber: **Siemens Aktiengesellschaft Berlin und München, Wittelsbacherplatz 2, D-8000 München 2 (DE)**

(72) Erfinder: **Behringer, Wolfgang, Am Flechtenberg 26, D-6140 Bensheim 4 (DE)**

## Beschreibung

Die Erfindung bezieht sich auf eine Steuereinrichtung für mehrere in einem zahnärztlichen Gerät in Ablagen gehalterte und aus diesen entnehmbare Instrumente, denen über Versorgungsleitungen Betriebsmittel, wie elektrischer Strom, Luft, Wasser, zugeführt werden, enthaltend mehrere geräteseitige Anschlußarmaturen, an die mittels instrumentenseitiger Anschlußarmaturen die Instrumente mit ihren Versorgungsleitungen anschließbar sind, wobei die Anschlußarmaturen Kupplungs- und Gegenglieder aufweisen, die die Betriebsmittel im angeschlossenen Zustand vom Gerät zu den Instrumenten weitergeben, wobei die geräteseitigen Anschlußarmaturen jeweils baulich gleich ausgebildet und mit Hilfe von lösbaren Verbindungsmitteln mit den ebenfalls baulich gleich ausgebildeten instrumentenseitigen Anschlußarmaturen verbindbar sind, und wobei die in den Anschlußarmaturen angeordneten Kupplungs- und Gegenglieder für die einzelnen Betriebsmittel in jeweils gleicher räumlicher Lage zueinander angeordnet sind, so daß die instrumentenseitigen Anschlußarmaturen an die geräteseitigen Anschlußarmaturen in beliebiger Kombination angeschlossen werden können.

Aus der DE-A-25 49 177 ist, eine Kupplungsvorrichtung für zahnärztliche Instrumente bekannt, bei der die Anschlußarmaturen sowohl an den Instrumenten als auch an den instrumentenseitigen Enden der Versorgungsleitungen baulich gleich ausgebildet und die in den Anschlußarmaturen angeordneten Kupplungs- und Gegenglieder für die einzelnen Betriebsmittel in jeweils gleicher räumlicher Lage zueinander angeordnet sind, so daß an ein und dieselbe Versorgungsleitung wahlweise das eine oder andere Instrument aus einer Reihe von unterschiedlich arbeitenden Instrumenten angeschlossen werden kann. Mit dem Anschluß der Armaturen erfolgt lediglich ein mechanisches Verbinden der die Medien führenden Kupplungsglieder mit den entsprechenden Gegengliedern innerhalb der Anschlußarmatur. Eine Steuerung der Betriebsmittel mit dem Anschluß der Instrumente an die Versorgungsleitungen erfolgt dabei nicht.

Aus US-A-38 86 660 und US-A-40 64 630 ist es ferner bekannt, für jedes Instrument ein instrumentenspezifisches Modul im Gerät vorzusehen. Die Versorgungsleitung für dieses Instrument ist an dem betreffenden Modul fest angeschlossen, d.h. das geräteseitige Ende des Versorgungsschlauches ist werkseitig mit den üblichen Anschlußarmaturen am betreffenden Modul angeschlossen. Die Anordnung und Reihenfolge der Instrumentenhalterung liegt zunächst fest. Bei dem Wunsch nach einem zusätzlichen Instrument oder einer anderen Plazierung der Instrumente an der Instrumentenhalterung muß der Kunde Umbauarbeiten vornehmen. Wenn z.B. bei einer Instrumentenbestückung von einem Elektromotorhandstück und zwei Turbinenhandstücken der Wunsch besteht nach einem zweiten Elektromotorhandstück, das beispielsweise speziell für chirurgische Eingriffe ausgebildet ist, muß das vorhandene Modul ausgebaut und durch ein anderes, dem gewünschten Instrument entsprechendes Modul ersetzt werden. Auch eine Umplazierung der Instrumente im Rahmen des täglichen Arbeitsablaufes, um z.B. ein Instrument ausgrifftechnischen Gründen für eine bestimmte Behandlung an anderer Stelle der Ablagehalterung zu haben, ist nur mit einer Umplazierung der gesamten Versorgung möglich.

Ziel der vorliegenden Erfindung ist es, demgegenüber eine Verbesserung zu schaffen, also eine Steuereinrichtung der eingangs genannten Gattung anzugeben, mit der es möglich ist, die Instrumente jederzeit, also auch beim Kunden, sowohl in der Reihenfolge ihrer Anordnung in der Ablagehalterung als auch hinsichtlich der Bestückung beliebig variieren zu können, ohne dabei Umbauarbeiten an der Versorgung zur folgerichtigen Steuerung der Betriebsmittel entsprechend des geänderten Anschlusses vornehmen zu müssen.

Zur Erreichung dieses Zieles wird gemäß der Erfindung vorgeschlagen, daß die geräteseitigen Anschlußarmaturen der Instrumente an einer von außen zugänglichen Stelle des Geräts angeordnet sind, und daß die Anschlußarmaturen mechanisch zusammenwirkende Codierungsmittel enthalten, die bei Anschluß einer instrumentenseitigen Anschlußarmatur an eine der geräteseitigen Anschlußarmaturen Signale an eine Auswerteelektronik geben, die dann Steuerorgane für die dem betreffenden Instrument zugeordneten Betriebsmittel einschalten.

Damit ist es möglich, jedes Instrument an einer beliebigen, vom Kunden wählbaren geräteseitigen Anschlußarmatur anzuschließen, wobei mit dem Anschluß die Funktionsfähigkeit hergestellt wird. Ein Instrument mit zugehörigem Versorgungsschlauch kann so selbst vom Kunden rasch ausgewechselt werden, was z.B. bei verstopften Leitungen, Verschleiß oder Sterilisieren des Schlauches erforderlich ist, oder auch an einer anderen Stelle der Instrumentenhalterung plaziert werden. Letzteres ist insbesondere dann von Bedeutung, wenn vergleichsweise wenig benutzte Instrumente, wie z.B. ein HF-Chirurgieinstrument, ein Spezialbohrinstrument od.dgl., an der für den Arzt gewohnten griffgünstigen Stelle plaziert werden sollen.

Wesentliche Vorteile der erfindungsgemäßen Steuereinrichtung sind also, daß der Kunde zu jeder Zeit die Instrumente wechseln kann, und zwar in einer beliebigen, von ihm gewünschten Reihenfolge, wobei die Instrumente nach einem Wechsel sofort wieder funktionsfähig sind, unabhängig davon, welches Instrument an welcher Anschlußstelle gewechselt wurde. Der Kunde kann mit der üblichen Standardversorgung für z.B. Elektromotor, Turbine, Ultraschall und HF-Chirurgie eine Vielzahl von zusätzlichen Instrumenten anschließen, die gleich oder unterschiedlich aufgebaut sind. Wenn beispielsweise vier Anschlußarmaturen geräteseitig vorgesehen sind, so können entweder vier Handstücke mit Luft- und/oder elektromechanischem Antrieb in gleicher oder unterschiedlicher Bauart hinsichtlich des Antriebs vorgesehen werden, ein oder mehrere Ultraschall- oder HF-Chirurgiehandstücke oder eine beliebige Kombination der Instrumente in einer beliebigen Reihenfolge. Eine Umplazierung der Instrumente nachträglich erfordert lediglich ein Umstecken der Anschlußarmatur; über die Codierung und die elektronische Auswerteeinrichtung werden dann automatisch die diesem Handstück spezifischen Betriebsmittel an der neu gewählten Stelle vorgewählt. Die den Instrumenten zugehörigen Versorgungen brauchen somit nicht umgerüstet zu werden.

Als Kupplungen sind vorteilhafterweise Steckkupplungen vorzusehen. Als Codierungsmittel sind vorteilhafterweise an den geräte- und schlauchseitigen Anschlußarmaturen Brückenglieder vorhanden, welche bei Anschluß des Versorgungsschlauches mit entsprechenden Gegengliedern kontaktieren und einer elektronischen Auswerteeinrichtung Signale zuführen, welche mittels einer Logikverknüpfung erfaßt und entscheidet, ob und wenn ja, welches Instrument angeschlossen ist, und welche sodann Steuersignale an die entsprechenden Versorgungsbausteine im Sinne einer Vorbereitung der Betriebsmittel zu dem betreffenden Instrument abgibt.

Ein Ausführungsbeispiel der Erfindung wird nachfolgend anhand der Zeichnung näher erläutert.

Es zeigen:

Figur 1 ein zahnärztliches Gerät in einer schaubildlichen-Darstellung,

Figur 2 Einzelheiten der instrumenten- und geräteseitigen Anschlußarmaturen,

Figur 3 ein Übersichtsschaltbild der Steuereinrichtung,

Figur 4 Einzelheiten der Auswerteelektronik nach Figur 3.

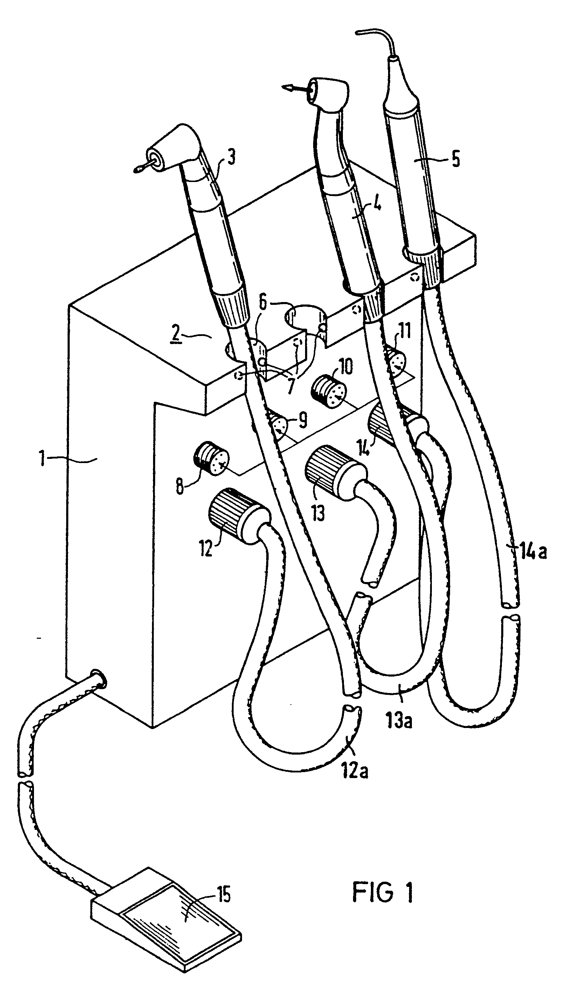

Die Figur 1 zeigt in einer stark vereinfachten schaubildlichen Darstellung ein zahnärztliches Gerät mit einem Gerätegehäuse 1, an dessen Oberseite eine Ablagehalterung 2 für vier Instrumente vorgesehen ist. Der besseren Übersichtlichkeit wegen sind in der Figur nur drei Instrumente eingezeichnet, ein Instrument 3 mit Elektromotorantrieb, ein Instrument 4 mit Druckluftantrieb (Turbine) und ein Instrument 5 mit Ultraschallantrieb zur Zahnsteinentfernung. Die Ablagehalterung 2 enthält ringförmige, nach vorne offene Ablageklauen 6, in denen die Instrumente bei Nichtgebrauch gehalten sind. Jede Ablageklaue 6 enthält eine aus Sender und Empfänger bestehende Lichtschranke 7, die bei Entnahme des Instruments einen Schaltimpuls an eine später noch näher erläuterte Auswerteelektronik abgibt.

An einer für den Arzt gut zugänglichen Stelle des Geräts befinden sich vier geräteseitige Anschlußarmaturen 8 bis 11, an die mittels einer Schnellkupplung (112, 113, 114) (Schraub- oder Steckkupplung) instrumentenseitige Anschlußarmaturen 12 bis 14 der Instrumente 3 bis 5 angeschlossen werden können. Die Armaturen 8 bis 11 sind, um ein gleichmäßiges Durchhängen der Versorgungsleitungen (12a bis 14a) zu ermöglichen, im Gehäuse 1 drehbar und gegebenenfalls in der gewünschten Drehstellung feststellbar gehaltert. Mit einem Fußschalter 15 kann zumindest die Funktion Ein/Aus für die einzelnen Antriebe angesteuert werden.

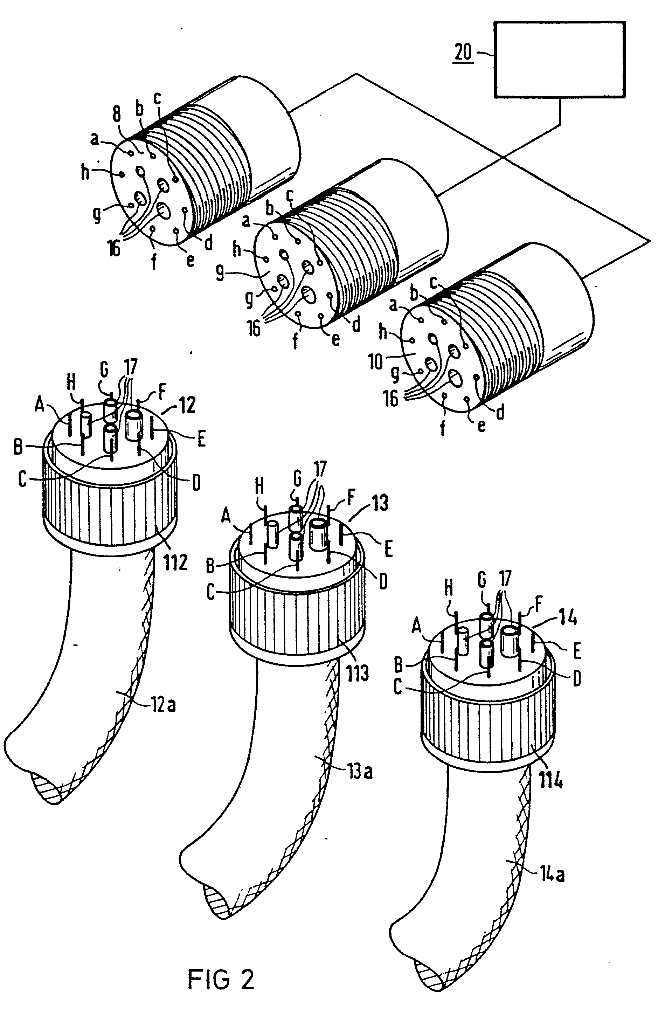

Die Figur 2 zeigt den Aufbau der geräte- und instrumentenseitigen Anschlußarmaturen in einer schaubildlichen Ansicht, wobei aus Platzgründen nur drei Armaturen gezeichnet sind. Die geräteseitigen Anschlußarmaturen 8 bis 10 haben im Zentrum vier Kanäle 16 für die Betriebsmittel Sprayluft, Treibluft, Rückluft und Spraywasser. Diese vier Kanäle sind, wie in der DE-A-25 49 177 beschrieben, bei allen Anschlußarmaturen nach einem einmal festgelegten Schema festgelegt. Über diese Kanäle werden die genannten Betriebsmittel von nicht dargestellten Versorgungsquellen zugeführt. Die zugehörigen Gegenglieder in den instrumentenseitigen Anschlußarmaturen 12 bis 14, mit denen im angekuppelten Zustand die Betriebsmittel von den geräteseitigen Anschlußarmaturen übernommen werden, sind nach dem gleichen Schema in Form von Rohrstutzen 17 vorgesehen. Dadurch kann beispielsweise das Instrument 3 mit der Anschlußaramatur 12 alternativ an einer der geräteseitigen Anschlußarmaturen 8, 9, 10 oder 11 angeschlossen werden.

Werden bei einem Instrument bestimmte Betriebsmittel nicht benötigt, so sind an der instrumentenseitigen Anschlußarmatur die betreffenden Gegenglieder nicht, bzw. in Form von Blindstiften oder -buchsen, vorgesehen. Die geräteseitigen Anschlußarmaturen jedoch enthalten sämtliche Betriebsmittel. Hierzu gehören auch drei elektrische Kontaktbuchsen f bis h, über die unterschiedliche Spannungspotentiale für diverse elektrische Verbraucher übertragen werden. Diese drei Kontaktbuchsen sind Teil einer Codierungseinrichtung mit konzentrisch zu den Medienzufuhrkanälen 16 angeordneten Codierungsbuchsen a bis h, deren zugehörige Codierungsstifte A bis H in den instrumentenseitigen Anschlußarmaturen 12 bis 14 vorgesehen sind. Mit diesen Codierungsmitteln wird, wie nachfolgend noch näher erläutert, erfaßt, ob ein Instrument angeschlossen ist und wenn ja, welche instrumentenspezifischen Betriebsmittel für dieses Instrument bereitgestellt werden müssen.

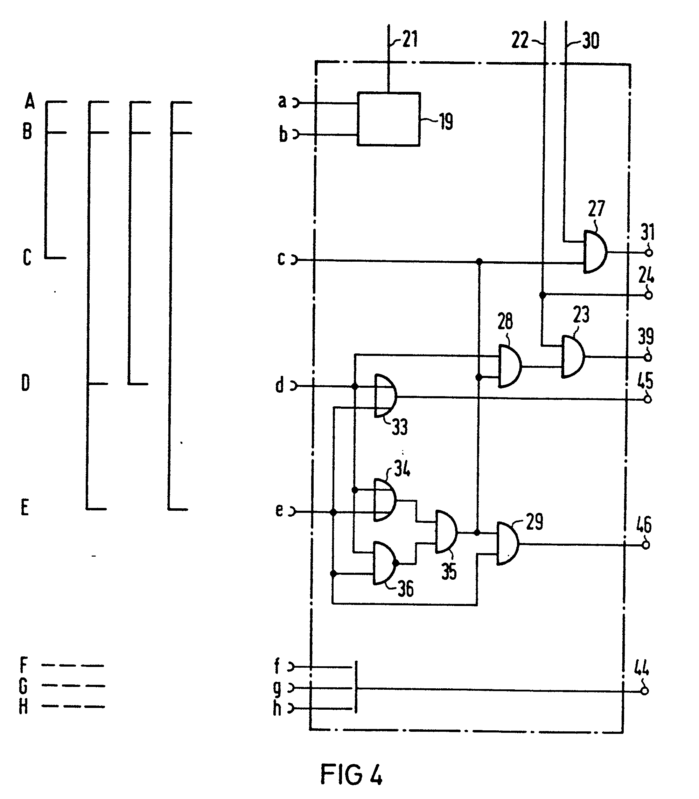

Die ersten fünf Codierungsstifte A bis E sind, wie in Figur 4 links schematisch dargestellt ist, Kontaktbrücken, mit denen im gekuppelten Zustand einer instrumenten- und einer geräteseitigen Anschlußarmatur einer später noch näher erläuterten Auswerteelektronik Steuersignale zugeführt werden. Mit den Kontaktstiften F bis H hingegen werden zu den jeweiligen Antrieben in den Instrumenten führende Leitungen, mit denen die Antriebe ihre Betriebsspannungen erhalten, verbunden.

Mit den beiden ersten Kontaktstiften A, B werden zunächst die Lichtschranken 7 in den Ablageklauen 6 der Handstückablage 2 eingeschaltet. Dies geschieht dadurch, daß bei Anschluß eines Instruments die Kontakte a/b überbrückt werden und damit eine in Figur 4 mit 19 bezeichnete Versorgung für die Lichtschranken ein Einschaltsignal erhält. Über die Steuerleitung 21 wird sodann die betreffende Lichtschranke eingeschaltet (für jede Lichtschranke ist eine Steuerleitung vorhanden). Die Lichtschranken geben sodann über Signaleingänge 22 einer Auswerteelektronik 20 Informationen, ob das betreffende Handstück entnommen ist oder sich noch im abgelegten Zustand befindet. Am Beispiel des Handstücks 3 sei dies näher erläutert:

Angenommen wird, das Handstück 3 befindet sich noch in der Ablageklaue 6 der Handstückhalterung 2 und die instrumentenseitige Anschlußarmatur 12 wird mit der geräteseitigen Armatur 8 verbunden. Mit Kontaktierung erhält die Auswerteelektronik 20 über die Brückankontakte Aa/Bb und die Steuerleitung 21 zunächst die Information, daß ein Handstück angeschlossen ist mit der Folge, daß die zugehörige Lichtschranke 7 in Betrieb genommen, also eingeschaltet, wird. Bei Entnahme des Handstücks aus der Ablage erhält die Auswerteelektronik 20 über die Signalleitung 22 ein Lichtschrankensignal, daß das Handstück entnommen ist. Dieses Signal wird (Figur 4) einerseits auf ein UND-Gatter 23 gelegt, andererseits einer Steuerleitung 24 zugeführt, die den zugehörigen Baustein, im vorliegenden Fall ein Relais 25, zur Einschaltung der Motorversorgung (Steuerelektronik 26) vorwählt. Die Steuerelektronik 26 wird ferner über die Brücke C/c vorbereitet; ein entsprechendes Signal wird hierzu einerseits an das UND-Gatter 27 und andererseits an die Gatter 28 und 29 gelegt, die, wie später noch erläutert, zur Ansteuerung der Bausteine für die weiteren Handstücke zuständig sind. Wenn die Auswerteelektronik 20 durch Betätigen des Fußschalters 15 über die Steuerleitung 30 das Signal "Ein" erhält, bekommt die Steuerelektronik 26 über die Steuerleitung 31 schließlich ein Einschaltsignal; über das Relais 32 und die Leitung 44 wird die Spannung sodann an den betreffenden Antrieb gelegt. Im vorliegenden Falle liegt z.B. an den Entnahmebuchsen f (-) und g (+) die erforderliche Betriebsspannung für den Antriebsmotor (0 bis 24 Volt) an.

Dieser Vorgang stellt sich ebenso ein, wenn das Instrument 3 nicht an der Anschlußarmatur 8, sondern beispielsweise an der Anschlußarmatur 9, 10 oder 11 angeschlossen wird. Hier würde dann eine andere Lichtschranke ein entsprechendes Steuersignal liefern.

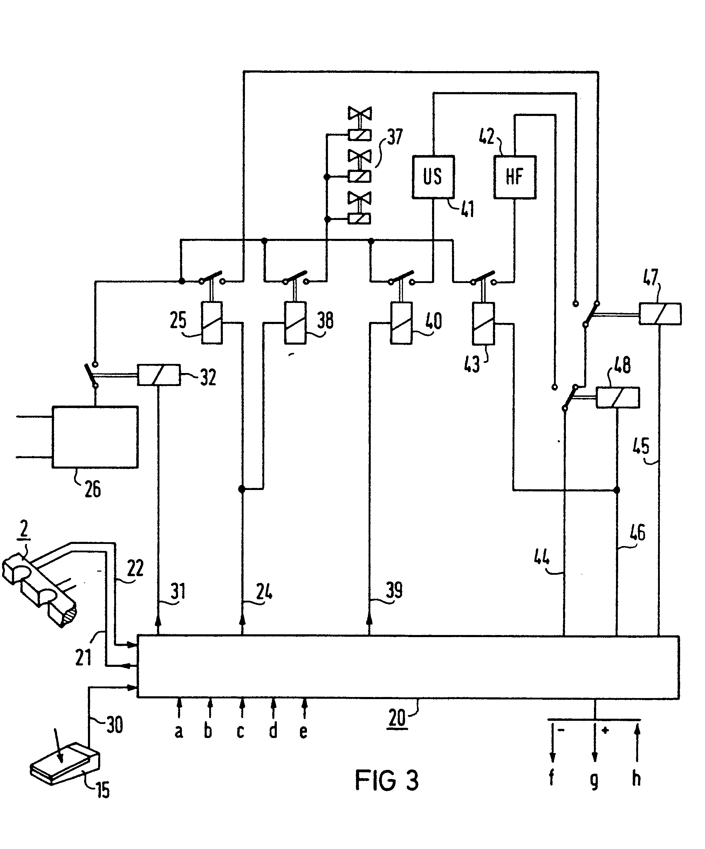

Beim Instrument 4 (Turbinenhandstück) sind die Brückenglieder A, B, D und E vorgesehen. Durch die beiden Brückenglieder D und E wird über die UND/ODER-Verknüpfung mit den Gattern 33 bis 36 erreicht, daß die Ausgangsspannung der Steuerelektronik nicht an die Ausgänge f bis h gelegt wird, dagegen die für den Betrieb der Turbine notwendigen Betriebsmittel, wie Treibluft, Sprayluft und Spraywasser, vorbereitet werden, d.h. bei Verwendung von Magnetventilen (Pos. 37 in Figur 3) werden diese über die Steuerleitung 24 und Relais 38 vorbereitend eingeschaltet. Die tatsächliche Einschaltung erfolgt auch hier wieder über den Fußschalter 15 und Relais 32.

Für das Instrument 5 gilt Analoges; hier sind die Brückenglieder A, B und D maßgebend. Am Ausgang des UND-Gatters 23 wird ein Steuersignal erzeugt, mit dem über die Steuerleitung 39 und Relais 40 der Versorgungsbaustein 41 für das Ultraschallhandstück vorbereitet (Steuerelektronik 26 vorbereitend eingeschaltet) und gleichzeitig eine normalerweise bei anderen Handstücken vorgesehene Heizung des Spraywassers abschaltet. Bei Betätigung des Fußschalters 15 wird die Steuerelektronik eingeschaltet, wodurch die erforderliche Betriebsspannung für den Ultraschallschwinger am Versorgungsbaustein 41 zur Verfügung steht.

In ähnlicher Weise erfolgt die automatische Ansteuerung bei Anschluß eines weiteren, z.B. eines HF-Chirurgiehandstückes, dessen Versorgungsbaustein 42 über die Steuerleitung 46 und Relais 43 vorbereitend eingeschaltet wird. Die Umschaltung des Ausgangs der Steuerelektronik auf den betreffenden Baustein wird über die Steuerleitungen 45 und 46 sowie Relais 47, 48 erzielt. Wenn, wie im Schaltbild gezeigt, die Steuerleitungen 45, 46 kein Signal erhalten, befinden sich die Relais-Kontakte in der gezeigten Stellung. Der Ausgang der Steuerelektronik ist somit direkt auf die Kontakte f und g gelegt und so für den Antrieb eines im Instrument 3 angeordneten Elektrokleinstmotors vorbereitet. Erhält die Steuerleitung 45 ein H-Signal, so wird das Relais 47 geschaltet mit der Folge, daß der Ausgang des Ultraschallbausteins 41 an die Kontakte f, g und h gelegt wird. Über die Kontakte f und g wird die erforderliche Betriebsspannung an den US-Schwinger herangeführt; der Kontakt h dient hier zur Rückkopplung. Erhält das Relais 48 über die Steuerleitung 46 ein H-Signal, so wird der HF-Chirurgieversorgungsbaustein 42 angeschaltet, d.h. an den Kontakten f und g liegt die für das HF-Chirurgiehandstück erforderliche Betriebsspannung an.

## Patentansprüche

1. Steuereinrichtung für mehrere in einem zahnärztlichen Gerät in Ablagen (6) gehaltete und aus diesen entnehmbare Instrumente (3 bis 5), denen über Versorgungsleitungen (12 bis 14) Betriebsmittel, wie elektrischer Strom, Luft, Wasser, zugeführt werden, enthaltend mehrere geräteseitige Anschlußarmaturen (8 bis 11), an die mittels instrumentenseitiger Anschlußarmaturen (12 bis 14) die Instrumente (3 bis 5) mit ihren Versorgungsleitungen (12a bis 14a) anschließbar sind, wobei die Anschlußarmaturen Kupplungs- und Gegenglieder (16, 17) aufweisen, die die Betriebsmittel im angeschlossenen Zustand vom Gerät zu den Instrumenten weitergeben, wobei die geräteseitigen Anschlußarmaturen (8 bis 11) jeweils baulich gleich ausgebildet und mit Hilfe von lösbaren Verbindungsmitteln (112, 113, 114) mit den ebenfalls baulich gleich ausgebildeten instrumentenseitigen Anschlußarmaturen (12 bis 14) verbindbar sind, und wobei die in den Anschlußarmaturen (8 bis 11; 12 bis 14) angeordneten Kupplungs- und Gegenglieder (16, 17) für die einzelnen Betriebsmittel in jeweils gleicher räumlicher Lage zueinander angeordnet sind, so daß die instrumentenseitigen Anschlußarmaturen (12 bis 14) an die geräteseitigen Anschlußarmaturen (8 bis 11) in beliebiger Kombination (8/12; 9/13; 10/14; 8/13; 9/12; 10/12; 10/13, 8/14; 9/14) angeschlossen werden können, dadurch gekennzeichnet, daß die geräteseitigen Anschlußarmaturen (8 bis 11) der Instrumente (3 bis 5) an einer von außen zugänglichen Stelle des Geräts (1) angeordnet sind, und daß die Anschlußarmaturen (8 bis 11; 12 bis 14) mechanisch zusammenwirkende Codierungsmittel (A bis H; a bis h) enthalten, die bei Anschluß einer instrumentenseitigen Anschlußarmatur an eine der geräteseitigen Anschlußarmaturen Signale an eine Auswerteelektronik (20) geben, die dann Steuerorgane (25, 38, 40, 43) für die dem betreffenden Instrument (3, 4, 5) zugeordneten Betriebsmittel einschalten.

2. Steuereinrichtung nach Anspruch 1, dadurch gekennzeichnet, daß die Codierungsmittel (A bis H; a bis h) so ausgebildet sind, daß sie bei Anschluß einer instrumentenseitigen Anschlußarmatur (12 bis 14) an die Auswerteelektronik (20) ein Signal geben, das den Anschluß eines Instruments (3 bis 5) an einer bestimmten geräteseitigen Anschlußarmatur meldet.

3. Steuereinrichtung nach Anspruch 2, dadurch gekennzeichnet, daß die Codierungsmittel (A bis E; a bis e) so ausgebildet sind, daß sie bei Anschluß einer instrumentenseitigen Anschlußarmatur an die Auswerteelektronik (20) ein Signal geben, das die Art des angeschlossenen Instruments (3 bis 5) meldet.

4. Steuereinrichtung nach einem der Ansprüche 1 bis 3, dadurch gekennzeichnet, daß in einer der Armaturen Steckstifte (A bis H) bzw. Brückenstifte angeordnet sind, die in entsprechend ausgebildete Kontaktbuchsen (a bis h) in der anderen Armatur eingreifen.

5. Steuereinrichtung nach einem der Ansprüche 1 bis 4, dadurch gekennzeichnet, daß die geräteseitigen Anschlußarmaturen (8 bis 11) drehbar im Gehäuse (1) gehaltert sind.

## Claims

1. A control device for a dental apparatus in which are held a plurarity of instruments (3 to 5) in holding units (6), to be removed from said units, and to which electric current air or water are supplied by operating means such as supply lines (12 to 14), comprising a plurality of apparatus connection armatures (8 to 11), to which the instruments (3 to 5) together with their supply lines (12a to 14a) can be connected by means of instrument connection armatures (12 to 14). where the connection armatures possess coupling and counter-elements (16, 17), which in the connected state transfer the operating means from the apparatus to the instruments, where the apparatus connection armatures (8 to 11) are of a mutually similar construction, and can be connected to the instrument connection armatures (12 to 14) via detachable connection elements (112, 113, 114) which are of mutually similar construction, and where the coupling and counter-elements (16, 17) for the individual operating means, which are arranged in the connection armatures (8 to 11, 12 to 14), are respectively arranged so as to be in the same spatial position to one another, so that the instrument connection armatures (12 to 14) can be connected to the apparatus connection armatures (8 to 11) in any combination (8/12; 9/13; 10/14; 8/13; 9/12; 10/12; 10/13; 8/14; 9/14), characterised in that the apparatus connection armatures (8 to 11) of the instruments (3 to 5) are arranged at an externally accessible point of the apparatus (1) , and that the connection armatures (8 to 11; 12 to 14) comprise mechanically interacting coding means (A to H; a to h), which upon connection or an instrument connection armature to one of the apparatus connection armatures transmit signals to an analyzing electronics unit (20) which then switch on control elements (25, 38, 40, 43) for the operating means assigned to the respective instrument (3, 4, 5).

2. A control device as claimed in Claim 1, characterised in that the coding means (A to H; a to h) are such that upon connection of an instrument connection armature (12 to 14) to the analyzing electronics unit (20) they transmit a signal which signals the connection of an instrument (3 to 5) to a specific apparatus connection armature,

3. A control device as claimed in Claim 2, characterised in that the coding means (A to E; a to e) are contrived such that upon connection of an instrument connection armature to the analyzing electronics unit (20) they transmit a signal which signals the type of the connected instrument (3 to 5).

4. A control device as claimed in one of Claims 1 to 3, <u>characterised in that</u> guide pins (A to H) or bridge pins are arranged in one of the armatures which engage into correspondingly designed contact bushes (a to h) in the other armature.

5. A control device as claimed in one of Claims 1 to 4, <u>characterised in that</u> the apparatus connection armatures (8 to 11) are rotatably mounted in the housing (1).

## Revendications

1. Dispositif de commande pour plusieurs instruments (3 à 5), qui sont retenus, dans un appareil de dentisterie, dans des supports (6) et peuvent en être retirés et auxquels des moyens de fonctionnement, comme par exemple un courant électrique, de l'air, de l'eau sont envoyés par l'intermédiaire de conduites d'alimentation (12 à 14), et comportant plusieurs embouts de raccordement (8 à 11) situés du côté de l'appareil et auxquels les instruments (3 à 5) peuvent être raccordés, par leur conduit d'alimentation (12a à 14a), au moyen d'embouts de raccordement (12 à 14) situés du côté des instruments, et dans lequel les embouts de raccordement comportent des organes d'accouplement et des organes antagonistes (16, 17) qui, à l'état raccordé, transfèrent les moyens de fonctionnement de l'appareil en direction des instruments, et dans lequel les embouts de raccordement (8 à 11), situés du côté de l'appareil sont respectivement identiques du point de vue construction et peuvent être reliés à l'aide de moyens détachables de liaison (112, 113, 114) aux embouts de raccordement (12 à 14) qui sont situés du côté des instruments et sont également respectivement identiques, et dans lequel les organes d'accouplement et les organes antagonistes (16, 17),qui sont disposés dans les embouts de raccordement (8 à 11 ; 12 à 14) pour les différents moyens de fonctionnement sont disposés les uns par rapport aux autres dans des positions spatiales respectives identiques de telle sorte que les embouts de raccordement (12 à 14) situés du côté des instruments peuvent être raccordés aux embouts de raccordement (8 à 11), situés du côté de l'appareil, selon n'importe quelle combinaison (8/12,; 9/13; 10/14; 8/13; 9/12; 10/12; 10/13; 8/14; 9/14), caractérisé par le fait que les embouts de raccordement (8 à 11), situés du côté de l'appareil, des instruments (3 à 5) sont disposés en un emplacement de l'appareil (1), accessible depuis l'extérieur, et que les embouts de raccordement (8 à 11; 12 à 14) contiennent des moyens de codage (A à H ; a à h) coopérant mécaniquement et qui, lors du raccordement d'un embout de raccordement situé du côté d'un instrument à l'un des embouts de raccordement, situés du côté de l'appareil, délivrent des signaux à un système électronique d'évaluation (20) qui branche alors des organes de commande (25, 38, 40, 43) pour les moyens de fonctionnement associés à l'instrument considéré (3, 4, 5).

2. Dispositif de commande selon la revendication 1, caractérisé en ce que les moyens de commande (A à H; a à h) sont agencés de telle sorte que lors du raccordement d'un embout de raccordement (12 à 14), situé du côté d'un instrument, au système électronique d'évaluation (20), ils délivrent un signal qui indique le raccordement d'un instrument (3 à 5) à un embout de raccordement déterminé, situé du côté de l'appareil.

3. Dispositif de commande selon la revendication 2, caractérisé en ce que les moyens de codage (A à E; a à e) sont agencés de telle sorte que lors du raccordement d'un embout de raccordement, situé du côté d'un instrument, au système électronique d'évaluation (20), ils délivrent un signal qui indique le type de l'instrument (3 à 5) raccordé.

4. Dispositif de commande suivant l'une des revendications 1 à 3, caractérisé par le fait que dans l'un des embouts se trouvent disposées des broches d'enfichage (A à H) ou des broches d'un pont, qui s'engagent dans les douilles de contact (a à h), réalisées avec une forme correspondante dans l'autre embout.

5. Dispositif de commande suivant l'une des revendications 1 à 4, caractérisé par le fait que les embouts de raccordement (8 à 11), situés du côté de l'appareil, sont maintenus de façon à pouvoir tourner dans le boîtier (1).

FIG 1

FIG 2

FIG 3

FIG 4